Europäisches Patentamt

European Patent Office

Office européen des brevets

(11) Numéro de publication: **0 445 691 A1**

## (12) DEMANDE DE BREVET EUROPEEN

(21) Numéro de dépôt: **91103206.8**

(22) Date de dépôt: **04.03.91**

(51) Int. Cl.⁵: **F04D 19/04**, F04D 29/04, F16C 39/06

(30) Priorité: **07.03.90 FR 9002864**

(43) Date de publication de la demande:
**11.09.91 Bulletin 91/37**

(84) Etats contractants désignés:
**AT BE CH DE DK ES FR GB GR IT LI LU NL SE**

(71) Demandeur: **ALCATEL CIT**
**12 Rue de la Baume**
**F-75008 Paris(FR)**

(72) Inventeur: **Lemarquand, Guy**

Les Vignes
**F-74370 Villaz(FR)**
Inventeur: **Perrillat-Amede, Denis**
**31, avenue des Carrés**
**F-74940 Annecy le Vieux(FR)**
Inventeur: **Pierrejean, Didier**
**Le Beau Site, Route du Col de Leschaux**
**F-74320 Sevrier(FR)**

(74) Mandataire: **Weinmiller, Jürgen et al**
**Lennéstrasse 9 Postfach 24**
**W-8133 Feldafing(DE)**

(54) **Pompe à vide à suspension magnétique.**

(57) Pompe à vide à suspension magnétique comprenant un stator (4A, 4B) et un rotor (5) entraîné en rotation par un moteur électrique (9, 10) intégré à la pompe, ladite suspension comprenant au moins un palier radial actif (14, 15, 16) associé à au moins deux détecteurs de position (17) situés à 90° l'un par rapport à l'autre dans un plan perpendiculaire à l'axe z de la pompe, caractérisée en ce que lesdits détecteurs de position (17) sont situés dans le plan d'action (P) dudit palier radial actif (14, 15, 16).

## FIG. 2

La présente invention concerne une pompe à vide à suspension magnétique.

La suspension magnétique est particulièrement bien adaptée aux pompes à vide moléculaires ou turbomoléculaires tournant à grande vitesse puisqu'avec un tel système de sustentation il n'y a aucun frottement ni aucune usure.

Cinq degrés de liberté sont à contrôler dans la sustentation magnétique d'un rotor :

Si l'on considère le centre de gravité o du rotor avec l'axe oz confondu avec l'axe de rotation et les axes ox et oy deux axes perpendiculaires situés dans le plan perpendiculaire en o à oz, ces cinq degrés de libertés, rapportés au centre de gravité o du rotor, peuvent être définis comme suit :
- une translation axiale selon oz
- deux translations radiales :
  l'une selon ox
  l'autre selon oy
- deux rotations perpendiculaires : l'une $\theta_x$ autour de l'axe ox et l'autre $\theta_y$ autour de l'axe oy.

Dans les sustentations magnétiques, ces degrés de libertés sont contrôlés par plusieurs paliers magnétiques. Il existe des paliers magnétiques actifs et des paliers magnétiques passifs. Les premiers comprennent des électro-aimants qui créent des forces de rappel et sont associés à des détecteurs de position, un circuit d'asservissement commande le courant des électro-aimants. Les paliers magnétiques passifs sont constitués uniquement d'aimants permanents, ils sont évidemment beaucoup plus simples et moins coûteux. Cependant, les paliers actifs permettent, par un choix correct de la fonction de transfert, l'amortissement des mouvements qu'ils contrôlent et en outre il est nécessaire, d'après le théorème d'Earnshaw, que l'une au moins des trois translations, selon ox, oy ou oz, du rotor soit contrôlée de façon active.

L'invention s'applique aux pompes à vide à suspension magnétique comprenant au moins un palier radial actif contrôlant les deux translations radiales selon ox et oy.

Pour l'asservissement du palier on utilise des détecteurs de position qui sont situés au-dessus ou au-dessous des électro-aimants du palier. Ainsi, la mesure de la position du rotor se fait dans un plan différent du plan d'action du palier magnétique.

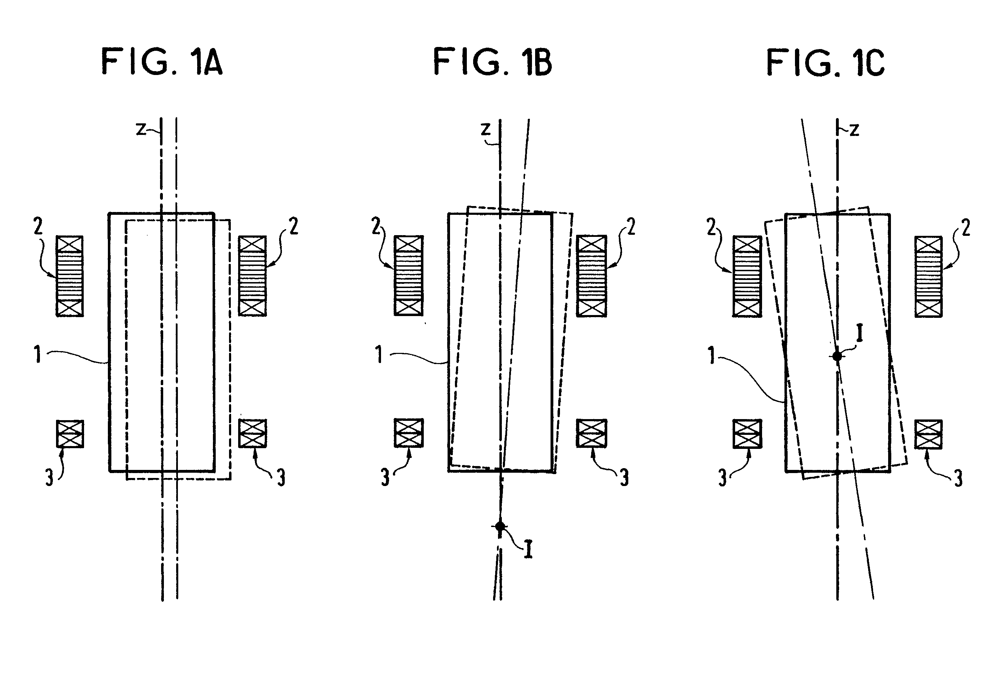

Les figures 1A, 1B et 1C sont des schémas qui illustrent trois déplacements possibles d'un rotor 1 par rapport à un palier radial 2 et aux détecteurs de position 3.

Dans la figure 1A, le rotor se déplace parallèlement à lui-même, dans ce cas, la correction appliquée au palier 2 est l'image exacte du déplacement.

Dans le cas de la figure 1B, le rotor effectue une rotation dont le centre instantané I n'est pas situé entre les détecteurs de position 3 et l'électro-aimant 2, la correction appliquée est alors seulement proportionnelle au déplacement réel. Enfin, dans le cas de la figure 1C, le rotor effectue une rotation dont le centre instantané de rotation I est situé entre les détecteurs de position 3 et les électro-aimants 2, alors les détecteurs voient un déplacement inverse de la correction à apporter aux électro-aimants 2. Ce cas de figure apparaît en particulier dans le cas d'une suspension magnétique comportant un seul centreur actif ou comportant deux centreurs actifs mais dont le rotor n'est pas rigide.

La présente invention a pour but de pallier ces inconvénients et a pour objet une pompe à vide à suspension magnétique comprenant un stator et un rotor entraîné en rotation par un moteur électrique intégré à la pompe, ladite suspension comprenant au moins un palier radial actif associé à au moins deux détecteurs de position situés à 90° l'un par rapport à l'autre dans un plan perpendiculaire à l'axe z de la pompe, caractérisée en ce que lesdits détecteurs de position sont situés dans le plan d'action dudit palier radial actif.

Selon une réalisation particulière, le rotor est en forme de cloche venant coiffer une protubérance interne du stator, ledit palier comprenant des bobinages électriques situés sur la partie statorique de la pompe et disposés par rapport auxdits détecteurs de position, également sur la partie statorique, de part et d'autre du rotor.

D'autres caractéristiques ressortiront de la description d'un exemple de mise en oeuvre de l'invention faite ci-après en regard du dessin annexé dans lequel :

Les figures 1A, 1B, 1C déjà décrites, sont des schémas illustrant les déplacements d'un rotor suspendu magnétiquement.

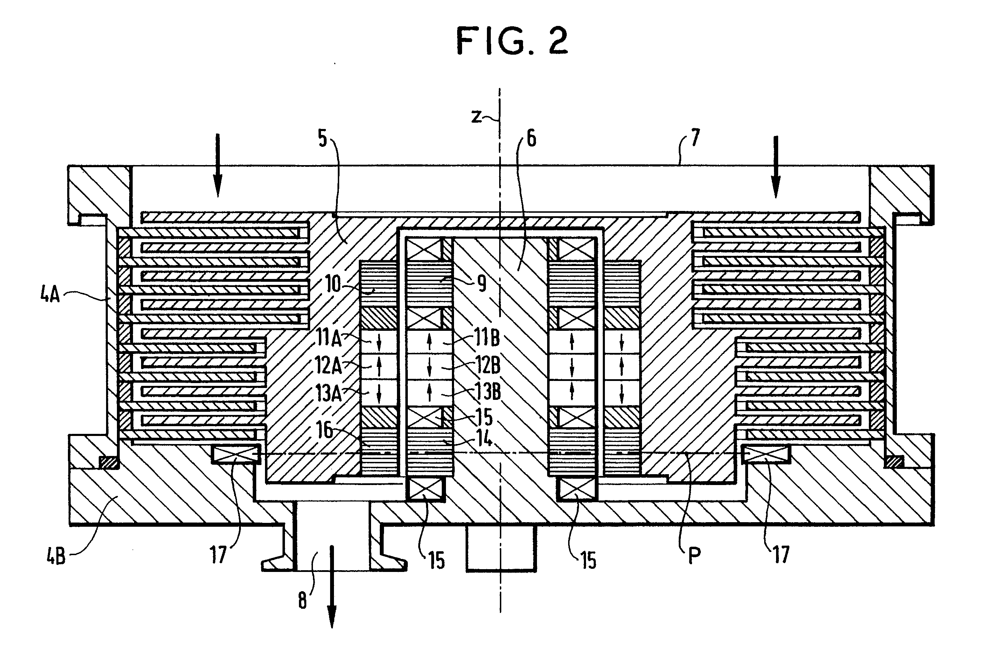

La figure 2 représente schématiquement une pompe à vide selon l'invention.

. La pompe à vide représentée est une pompe turbomoléculaire à ailettes comprenant un stator en deux parties 4A et 4B et un rotor 5 venant coiffer une protubérance 6 interne du stator. Le stator comprend une entrée 7 d'aspiration et une sortie 8 de refoulement. Le rotor est entraîné en rotation par un moteur électrique intégré à la pompe du type à hystérésis comprenant un stator 9 et un rotor 10.

Le rotor est suspendu magnétiquement au moyen d'une butée axiale passive à aimants permanents comprenant trois paires de bagues aimantées axialement. Chaque paire comprenant une bague rotorique et une bague statorique aimantées en sens inverse l'une de l'autre. En outre chaque paire est également aimantée en sens inverse de la paire ou des deux paires adjacentes. La première paire est référencée 11A, 11B, la deuxième 12A, 12B et la troisième 13A, 13B. Cette butée axiale assure le maintien axial selon l'axe z de la pompe et la stabilise également vis-à-vis des rotations autour de deux axes perpendiculaires situés dans un plan perpendiculaire à l'axe z.

De préférence, le centre de gravité de la butée axiale est sensiblement confondu avec le centre de gravité du rotor.

La suspension magnétique du rotor comporte en outre un palier radial actif comprenant une partie statorique 14 munie de bobinages 15 assurant le maintien du rotor radialement selon deux axes perpendiculaires situés dans un plan perpendiculaire à l'axe z de rotation de la pompe. Ce palier comprend également une partie rotorique 16. Ce palier est classiquement asservi selon les deux dits axes perpendiculaires au moyen de deux canaux classiques d'asservissement, en fonction des informations données par au moins deux détecteurs de position 17 situés à 90° l'un par rapport à l'autre. Dans le cas présent, on a deux détecteurs 17 par axe d'asservissement. Conformément à l'invention, ces détecteurs de position 17 sont situés dans le plan P d'action du palier radial actif 14, 15, 16. Ainsi, la correction appliquée aux bobinages 15 du palier correspond à l'image exacte des déplacements.

Les bobinages électriques 15 de l'électro-aimant du palier radial actif sont situés sur la protubérance 6 de la partie statorique 4B tandis que les détecteurs de position 17 sont situés, par rapport à ces bobinages, également sur la partie statorique 4B, mais à l'extérieur du rotor 5. La disposition pourrait être inversée.

**Revendications**

1. Pompe à vide à suspension magnétique comprenant un stator (4A, 4B) et un rotor (5) entraîné en rotation par un moteur électrique (9, 10) intégré à la pompe, ladite suspension comprenant au moins un palier radial actif (14, 15, 16) associé à au moins deux détecteurs de position (17) situés à 90° l'un par rapport à l'autre dans un plan perpendiculaire à l'axe z de la pompe, caractérisée en ce que lesdits détecteurs de position (17) sont situés dans le plan d'action (P) dudit palier radial actif (14, 15, 16).

2. Pompe à vide selon la revendication 1, caractérisée en ce que ledit rotor (5) est en forme de cloche venant coiffer une protubérance (6) interne du stator, ledit palier comprenant des bobinages électriques (15) situés sur la partie statorique de la pompe et disposés par rapport auxdits détecteurs de position (17), également sur la partie statorique (4B), de part et d'autre du rotor.

3. Pompe à vide selon l'une des revendications 1 ou 2, caractérisée en ce qu'elle comprend un seul palier radial actif contrôlant les translations selon deux axes perpendiculaires situés dans un plan perpendiculaire à l'axe z, et une butée axiale passive à aimants permanents assurant le maintien axial du rotor et sa stabilité vis-à-vis des rotations autour de deux dits axes perpendiculaires.

## FIG. 1C

## FIG. 1B

## FIG. 1A

# FIG. 2

EP 0 445 691 A1

**Office européen des brevets**

# RAPPORT DE RECHERCHE EUROPEENNE

Numéro de la demande

**EP 91 10 3206**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 512 507 (KABUSHIKI KAISHA DAINI SEIKOSHA) * page 2, ligne 4 - page 3, ligne 23; figure 2 * <br> — — — | 1 | F 04 D 19/04 <br> F 04 D 29/04 <br> F 16 C 39/06 |
| A | FR-A-2 565 310 (COMMISSARIAT A L'ENERGIE ATOMIQUE) * page 3, ligne 24 - page 4, ligne 13; figure 1 * <br> — — — | 1-3 | |
| A | PATENT ABSTRACTS OF JAPAN vol. 11, no. 48 (M-561)(2495) 13 février 1987, & JP-A-61 210290 (SHIMADZU) 18 septembre 1986, * le document en entier * <br> — — — — — | 1,3 | |

**DOMAINES TECHNIQUES RECHERCHES (Int. Cl.5)**

F 04 D
F 16 C

Le présent rapport de recherche a été établi pour toutes les revendications

| Lieu de la recherche | Date d'achèvement de la recherche | Examinateur |
|---|---|---|
| La Haye | 10 mai 91 | TEERLING J.H. |